Europäisches Patentamt

European Patent Office

Office européen des brevets

(19)

(11) Publication number: **0 081 958**
**A1**

(12) **EUROPEAN PATENT APPLICATION**

(21) Application number: **82306463.9**

(22) Date of filing: **06.12.82**

(51) Int. Cl.³: **G 11 B 27/34**, G 11 B 27/36

(30) Priority: **11.12.81 GB 8137482**

(43) Date of publication of application: **22.06.83**
**Bulletin 83/25**

(84) Designated Contracting States: **DE FR NL**

(71) Applicant: **Racal Recorders Ltd, Western Road, Bracknell RG12 1RG Berkshire (GB)**

(72) Inventor: **Crick, Neil Martyn, Ashby House Whitenap Lane, Romsey Hampshire (GB)**

(74) Representative: **Foster, David Martyn et al, Mathisen, Macara & Co. Lyon House Lyon Road, Harrow Middlesex HA1 2ET (GB)**

(54) Improvements in and relating to tape recorders.

(57) The tape recorder, includes a cathode ray tube (14) for selectively displaying signal parameters relating to the channels of the recorder. It can display information in a variety of different formats or «pages», any one of which may be selected by means of push buttons (22).

In one page, the CRT provides alphanumeric identification of a variety of different signal parameters such as «bias», «input level», «output level», and others. By means of a rotary control (26), an operator can move a cursor on the screen to any particular one of these parameters, and a further rotary control (28) is then used to select a particular one of the channels, whose identity is the displayed on the screen. By means of a rotary control (24), the operator can then adjust the value of the selected parameter in the selected channel, and a bar graph on the screen displays the parameter.

0081958

IMPROVEMENTS IN AND RELATING TO TAPE RECORDERS

## BACKGROUND OF THE INVENTION

The invention relates to information recording apparatus such as tape recorders, for example, that is apparatus for recording information on, and reproducing information from, magnetic tape.

In the description which follows, the invention is shown, by way of example, as being applied to an instrumentation tape recorder. An instrumentation tape recorder can record data (analogue or digital) on any one of a number (e.g.28 or 42) of tracks on the magnetic tape and can thus handle a very large amount of data. The recorder therefore has to be provided with separate channels for handling the data relating to each track on the tape, and controls for enabling access to any of the tracks and at any point in the length of the tape. The invention is concerned with providing means to facilitate monitoring and control of the recorder.

## SUMMARY OF THE INVENTION

According to the invention, there is provided information recording apparatus incorporating visual display means for displaying the values of parameters controlling and/or recorded by the apparatus, the visual display means having a display area, and control means operable to set each of a plurality of incremental parts of the display area to display any selected one of a plurality of the parameters whereby the display

0081958

means presents a display having any one of a number of different and predetermined formats.

According to the invention, there is also provided a multi-channel tape recorder incorporating a cathode ray tube (CRT) display, and display control means operable to set the CRT to display information relating to the signal parameters of any one or more of the said channels.

### DESCRIPTION OF THE DRAWINGS

A tape recorder embodying the invention will now be described, by way of example only, with reference to the accompanying diagrammatic drawings in which:

Figure 1 is a diagrammatic view of the recorder; and

Figure 2 is a block circuit diagram of the recorder.

DESCRIPTION OF PREFERRED EMBODIMENTS

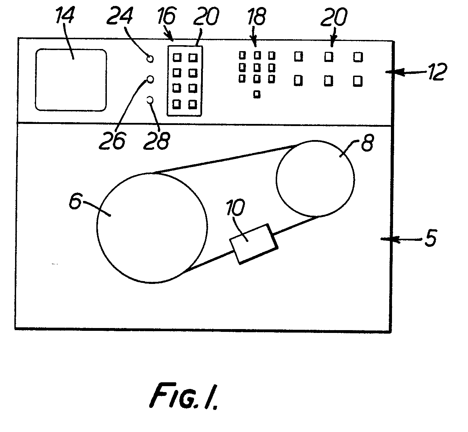

Figure 1 shows a simplified diagrammatic front view
of one form which the recorder can take. In this view,
the section 5 houses the tape transport which is
illustrated only very diagrammatically in the form of
a spool arrangement 6, tape drive mechanism 8 and
record, replay and erase heads 10. The tape is a multitrack tape having twenty eight tracks in this example
(but may have more or less tracks). The tape drive
mechanism may take any suitable form and will not be
described further. It enables the tape to be rapidly
moved so as to bring any desired portion into position
adjacent the heads 10 and to be moved past the heads,
for recording or replaying data from desired tracks on
the tape, at a variety of different selectable speeds.
Each of the heads has a particular channel circuit
associated with it. Each of the channels processes
incoming data to be recorded in a particular channel
and applies it to the recording head, and processes
data replayed from a particular channel so as to provide
a corresponding electrical signal output. The channels
will be further described below, but for the purposes
of the present invention may take any suitable form.

The second part of the front of the recorder is in the form of a control and display section 12. The purpose of the display section 12 is to enable the user to control and monitor recording and replaying generally and, more specifically, to control and adjust various recording and replay parameters. In accordance with a feature of the invention, the control and display seciton 12 includes a cathode ray tube (CRT) 14 which is controllable by means of controls 16 which will be described in more detail below. The control and display section 12 also incorporates further controls shown by way of example as a bank of push buttons 18 and further controls 20 for controlling such functions as recording and replaying, for rapidly winding the tape in the forward or reverse directions, and for controlling tape speed. The controls 18 comprise push buttons by means of which the operator may enter a digital number representing a particular position on the tape.

The CRT 14 and its associated controls 16 (together with its associated circuitry to be described below) enable a large amount of information to be simultaneously displayed. For example, the CRT 14 can be arranged to display, simultaneously, the input levels, or the output levels, applicable to all twenty eight channels. Therefore, the CRT 14 can take the place of individual meters, one for each of the twenty eight channels.

0081958

The information which can be displayed on the CRT 14 is organised into "pages". Each page displays a different set of information. The pages are selected by means of push buttons 22 forming part of the controls 16. In this particular example, eight such push buttons are shown, seven of which are arranged for selecting individual pages, and the eighth of which is used to enable the other seven to obtain access to seven further pages. In this way, the controls 22 can be used to select any one of fourteen pages.

In addition, the controls 16 include three rotary controls 24, 26, 28 whose purpose will be explained further below.

Some examples of the pages which the CRT 14 can be controlled to display will now be described.

One example is a tape status page. When this is selected by means of the appropriate one of the push buttons 22, the CRT 14 displays alphanumeric information indicating the distance which the tape has moved from its beginning, the time which is represented by this distance at the selected tape speed, the remaining tape length to the end of tape and the time represented by this length of tape, again at the selected speed. Clearly, if this page is selected while the tape is running, the CRT will display continuing changing information.

In order to enable the CRT to display this information, the operator has to set up the recorder initially, when a new tape spool is placed in position, by using the push buttons 18 to enter the total length of tape on the spool.

Another page enables input and output levels to be displayed. This display is in the form of a bar graph display, one bar graph for each channel, all the bar graphs being displayed simultaneously and each being labelled with the appropriate channel number. The display may also annotate each channel with information indicating the type of recording (e.g. FM, DR, high density digital recording, voice). Other information may be displayed: for example, a flag may be displayed adjacent any particular bar graph representing a channel on which data is being recorded, if the level of the incoming signal is such as to overload the channel.

A further page which may be displayed is a channel information page. When this page is selected (by means of the controls 22), a variety of different adjustable parameters are identified, e.g. "bias", "input level", "output level" and "channel number". The purpose of this information is to enable the operator to select any particular channel and any particular one of the identified parameters, and then to carry out an adjustment of that parameter in relation to that channel. This process is

0081958

carried out by means of the rotary controls 24, 26 and 28. Control 28 enables the operator to select any particular desired channel. As he rotates control 28, each different selected channel is identified by number against "channel number" on the display page of information. When he has selected the desired channel to be adjusted, he then uses control 26 which adjusts a cursor on the displayed page and positions it against the particular parameter (e.g. "bias") to be adjusted in the selected channel. Finally, he carries out the actual adjustment by means of the control 24. The particular parameter being adjusted is displayed on the CRT in the form of a bar graph and by means of this, he can adjust the parameter to the desired value.

Another page which may be selected enables the operator to set up a "shuttle" operation of the recorder. In a shuttle operation, the recorder is pre-set to replay the recorded information between two defined tape positions, then automatically to re-wind to the initial position and to repeat, and to carry on repeating this operation until stopped. This enables repeated monitoring or analysis of particular recorded information to be carried out. When this page is selected, the operator can then set up a particular shuttle operation by selecting the desired channel, by means of the rotary control 28, feeding in the address of the beginning and end of the

0081958

length of tape to be shuttled, by means of the keys 18, and selecting the appropriate tape speed, by means of the controls 20. In carrying out the setting up operation, the operator would also use the cursor control 26 so as to select in turn each of the parameters to be adjusted.

A further page which can be selected controls the recorder in a "sequence" operation. In such an operation, the recorder is set up so as to record on one (or more than one) selected channel when moving in the forward direction from a particular position on the tape to another particular position, and then to record on one or more other channels when moving in the reverse direction. By means of the various controls, including the cursor control 26 and the channel control 28, the user can set up any desired sequence combination.

The foregoing are merely examples of various pages of information which can be arranged to be displayed by the CRT 14. It will be appreciated that the use of a CRT as the display means gives almost total freedom to display any desired information, it being merely necessary to input the required display signals. In other words, the particular information which can be displayed, and the format in which it is displayed, are not restricted. For example, if simple analogue meters are used to display information, they can only display information which can be reduced to analogue electrical signals and of course the pointer and scale of a meter can only display a single parameter. Therefore, analogue meters provide a very restricted form of display and it is either necessary to provide a separate meter for each channel or a single meter with a complex switching arrangement; even a multimeter arrangement does not provide easy comparison between different channels, and of course a single meter makes simultaneous comparison impossible. The CRT is also advantageous over other forms of display such as bar graph displays using light emitting diodes, liquid crystals or plasma arrangements. Such display arrangements again have fixed format.

The use of a CRT has other advantages. In can, for exmaple, be used to display information explaining to the user how to operate the recorder.

The data relating to the alphanumeric words and characters to be displayed is pre-stored, in suitable coded form, in a memory in the recorder, and it is a comparatively simple matter to remove the memory module storing this information and to substitute for it a memory module storing similar information but in a different language.

It will be appreciated that the versatility and usefulness of the cathode ray tube in this particular application results from the fact that its display is incrementally adjustable, that is, individually adjustable in areas each of whose sizes is a very small proportion of the total display area, and therefore the CRT 14 may be replaced by any other suitable form of display device which is similarly adjustable. Thus, for example, a matrix arrangement of LED's or LCD's may be used provided that each LED or LCD is of sufficiently small size and arranged to be individually controllable.

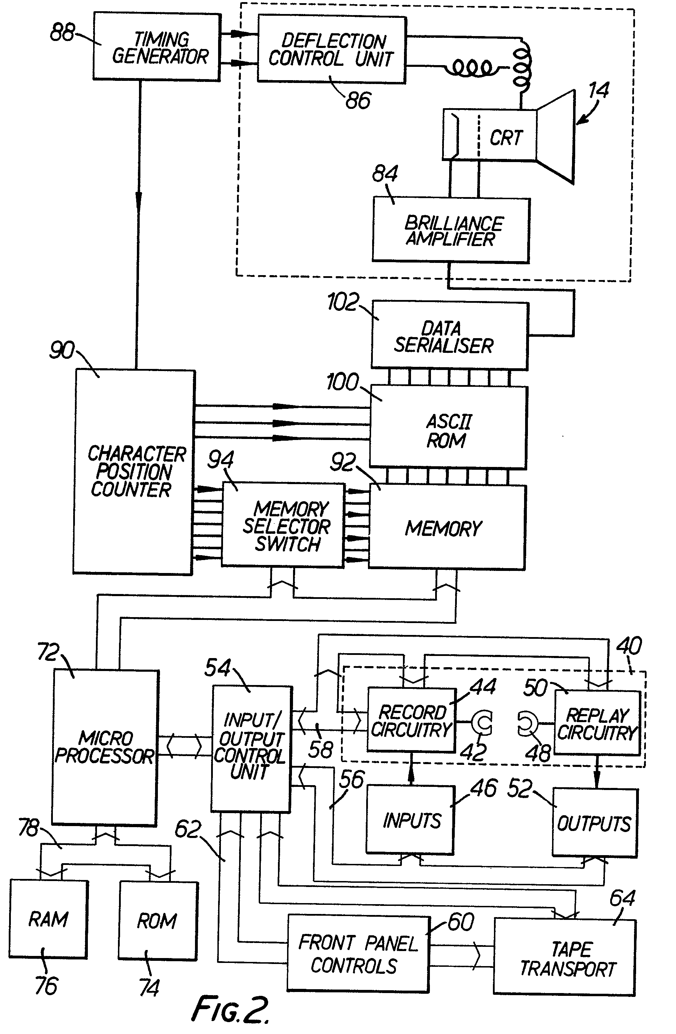

Figure 2 shows the recorder in block diagram form.

Shown within the dotted line 40 is the record/replay module for one of the twenty eight channels. Each of the other channels would have a similar module. As shown, the module comprises a record head 42 which is driven by recording circuitry 44 which receives input signals to be recorded from an input terminal unit 46. The recording circuitry 44 may be conventional circuitry and will not be specifically described.

In addition, the module 40 includes a replay head 48 which drives replay circuitry 50 which again may be conventional in nature and feeds its output to an output terminal unit 52.

The terminal units 46 and 52 connect to terminals on suitable input and output connectors of the recorder.

In addition, the input and output signals of the record/replay modules are fed to an input/output control unit 54 by means of a data channel 56.

The input/output control unit 54 is responsive to signals from the controls of the control and display section 12 (see Fig.1), as indicated generally by the block 60 and the data channel 62. Signals relating to a particular position on the tape (which the user sets in by means of the keys 18, see Fig.1), and relating to a desired tape speed (set in by means of the keys 20, Fig.1), are fed by the input/output unit to the tape transport circuitry shown by the block 64. In known fashion, this circuitry can also detect the position of the tape at any particular time and this information is fed back into the input/output control unit 54 on channel 65.

By means of channels 66 the input/output control unit can feed control signals to the recording and replay circuitry 46 and 50.

The recorder also includes a microprocessor 72 which has associated with it a read only memory (ROM 74) and a random access memory (RAM) 76 to which it is connected by the data channel 78.

The microprocessor controls the CRT 14.

Associated with the CRT 14 are a brilliance amplifier 84 and a deflection control unit 86 for controlling the deflection circuits of the CRT. The deflection control unit 86 is controlled by a timing generator 88 which produces line and frame synchronising pulses for the unit 86 and also for a character position counter 90.

The system includes a random access memory (RAM) 92 which stores data representing the character positions on the screen.

When the operator selects a particular "page" to be displayed on the CRT 14, the resultant control signals from the operator's controls 60 are fed to the microprocessor 72 via the input/output control unit 54. The microprocessor therefore reads out the basic pre-stored information concerning the format of the particular page from the ROM 74 and passes this information to the RAM 92 so that it is stored in the appropriate character positions in the RAM. In addition, most pages require the display of parameter values relating to one or more of the channels, and the microprocessor 72 accordingly obtains this information via the input/output control unit 54 from the appropriate record/replay modules, and this information is fed into appropriate character positions in the RAM

The microprocessor activates a memory selector switch 94 under control of the character position counter 90 so that the data to be displayed on the CRT is fed out from the RAM 92 in synchronism with the CRT display. The output of the RAM is in the form of signals representing

0081958

the total data to be displayed (made up of pre-stored
alphanumeric information and also signal measurements)
and this data occurs at the appropriate instants in time.
These signals are decoded in a decoder read-only memory
(ROM) 100, which contains graphics as well as operating
in accordance with the ASCII code (American Standard
Code for Information Interchange).  The decoded output
information is then serialised in a data serialiser 102
and controls the brilliance amplifier 84, so as to
produce the required display.

The tape recorder may be provided with a simple
output terminal arrangement by means of which a remote
cathode ray tube or television monitor may be connected
to display the information being displayed by the CRT 14.

Although the description  above has referred to the
instrument as being a tape recorder, it will be appreciated that it may instead be another suitable form of instrument
or recorder.

0081958

CLAIMS

1.  Information recording apparatus incorporating visual display means (14) for displaying the values of parameters controlling and/or recorded by the apparatus, the visual display means having a display area, and control means (54, 72) operable to set each of a plurality of incremental parts of the display area to display any selected one of a plurality of the parameters whereby the display means (14) presents a display having any one of a number of different and predetermined formats.

2.  Apparatus according to claim 1, in which the control means includes means operable when the display means is displaying a display according to any one of the said formats to alter or adjust one of the said parameters whose value is part of the said display, whereby to alter the value of that parameter.

3.  Apparatus according to claim 1 or 2, in which the visual display means is a cathode ray tube (CRT).

4.  Apparatus according to claim 3, in the form of a multi-channel tape recorder display, and in which the control means is operable to set the CRT to display information relating to the parameters of any one or more of the said channels.

5.  Apparatus according to claim 4, in which in one such format the CRT displays, simultaneously, the values of a particular parameter in all or in a plurality of the channels.

6.  Apparatus according to claim 4 or 5, in which in one such format the CRT displays the value of a particular one, or more than one, of the parameters relating to a particular one of the channels.

7.  Apparatus according to claim 6, in which the control means includes means operable to alter the identity of the particular channel whose parameter value is being displayed.

8.  Apparatus according to claim 6 or 7, in which in one said format the CRT identifies simultaneously a plurality of different parameters, and the control means includes means for selecting any particular one of these identified parameters and displaying its value.

9.  Apparatus according to claim 8, in which the control means includes means for indicating the selected parameter on the CRT by means of a movable cursor mark forming part of display.

FIG. 1.

2/2

FIG.2.

# EUROPEAN SEARCH REPORT

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | AT-B- 364 176 ("EUMIG" ELEKTRIZITÄTS- ÜND METALLWAREN-INDUSTRIE GmbH) *Page 2, line 9; page 3, lines 1-38; page 5, line 8 - page 8, line 14* | 1,3,6 | G 11 B 27/34 G 11 B 27/36 |
| A | FR-A-2 440 056 (STAAR S.A.) *Page 7, lines 24-34; page 12, line 8 - page 17, line 13* | 1,3,8 | |
| A | BE-A- 886 928 (STAAR S.A.) *The whole document* | 1,3 | |
| A | US-A-3 279 799 (PROCTOR) *The whole document* | 1,4,6, 7 | |
| | | | TECHNICAL FIELDS SEARCHED (Int. Cl. 3) |
| A | PATENTS ABSTRACTS OF JAPAN, vol. 6, no. 27(P-102)[905], 17th February 1982; & JP - A - 56 145 579 (TEAC K.K.) (12-11-1981) *Abstract* | 1,2,6, 7 | G 11 B |
| A | DE-A-2 918 846 (GRUNDIG E.M.V.) *The whole document* | 1,3,9 | |

The present search report has been drawn up for all claims

| Place of search THE HAGUE | Date of completion of the search 25-02-1983 | Examiner DAALMANS F.J. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82